# DEMANDE DE BREVET EUROPEEN

(11) **EP 0 770 544 A1**
(43) Date de publication de la demande: **02.05.1997**
(21) Numéro de dépôt: 95402412.1
(22) Date de dépôt: 27.10.1995
(51) Int. Cl.: B63H 21/12, B63J 5/00

(54) **Installation de propulsion sur un navire de transport de gaz liquéfié**

(71) Demandeur: CHANTIERS DE L'ATLANTIQUE, 75116 Paris (FR)
(72) Inventeur: Courtay, Roger, F-44410 Herbignac (FR)
(74) Mandataire: Gosse, Michel

(57) **Abrégé**

Installation de propulsion pour un navire de transport de gaz liquéfié comportant au moins une cuve (1) de gaz liquéfié (2), comprenant au moins un moteur alimenté au moins en partie par les gaz (3) provenant de l'évaporation naturelle dudit gaz liquéfié dans ladite cuve (1), caractérisée en ce que le moteur est un moteur diesel (15) entraînant une hélice (10) par l'intermédiaire d'une chaîne de transmission comprenant un générateur (16) entraîné par ledit moteur diesel, le générateur alimentant un moteur électrique (18) entraînant l'hélice (10) par l'intermédiaire d'un réducteur (19) et d'un embrayage (20) et en ce qu'elle comporte en outre un frein hydraulique (21) entraîné par une sortie mécanique de l'installation.

## Description

La présente invention concerne une installation de propulsion sur un navire de transport de gaz liquéfié.

L'invention s'applique en particulier aux navires méthaniers.

Actuellement la propulsion des navires méthaniers est effectuée par le moyen d'une turbine à vapeur.

Le combustible de la chaudière alimentant la turbine en vapeur est au moins en partie constitué par du gaz provenant de l'évaporation naturelle du méthane transporté. En effet, celui-ci est transporté liquide, à pression ambiante, dans des cuves isolées. Il en résulte une évaporation naturelle significative. Le gaz provenant de cette évaporation naturelle est donc utilisé comme combustible pour la propulsion.

Lorsque le navire est stoppé, il est donc nécessaire de dissiper l'énergie produite par la combustion du gaz d'évaporation des cuves car il est interdit de rejeter directement à l'atmosphère le gaz provenant des cuves et on ne peut pas non plus laisser monter la pression au-dessus d'un certain seuil. On continue donc à alimenter la chaudière par les gaz d'évaporation des cuves et la vapeur produite, au lieu d'être détendue dans la turbine, est directement envoyée au condenseur en court-circuitant la turbine.

La présente invention a pour but de proposer un système de propulsion plus économique ne faisant pas appel à la vapeur comme moyen intermédiaire moteur et ne comportant donc pas de condenseur, mais incluant un moyen adapté au système pour résoudre le problème posé par l'évaporation naturelle du gaz liquéfié et sa consommation lorsque le navire est à l'arrêt.

L'invention a ainsi pour objet une installation de propulsion pour un navire de transport de gaz liquéfié comportant au moins une cuve de gaz liquéfié, comprenant au moins un moteur alimenté au moins en partie par les gaz provenant de l'évaporation naturelle dudit gaz liquéfié dans ladite cuve, caractérisée en ce que le moteur est un moteur diesel entraînant une hélice par l'intermédiaire d'une chaîne de transmission comprenant un générateur entraîné par ledit moteur diesel, le générateur alimentant un moteur électrique entraînant l'hélice par l'intermédiaire d'un réducteur et d'un embrayage et en ce qu'elle comporte en outre un frein hydraulique entraîné par une sortie mécanique de l'installation.

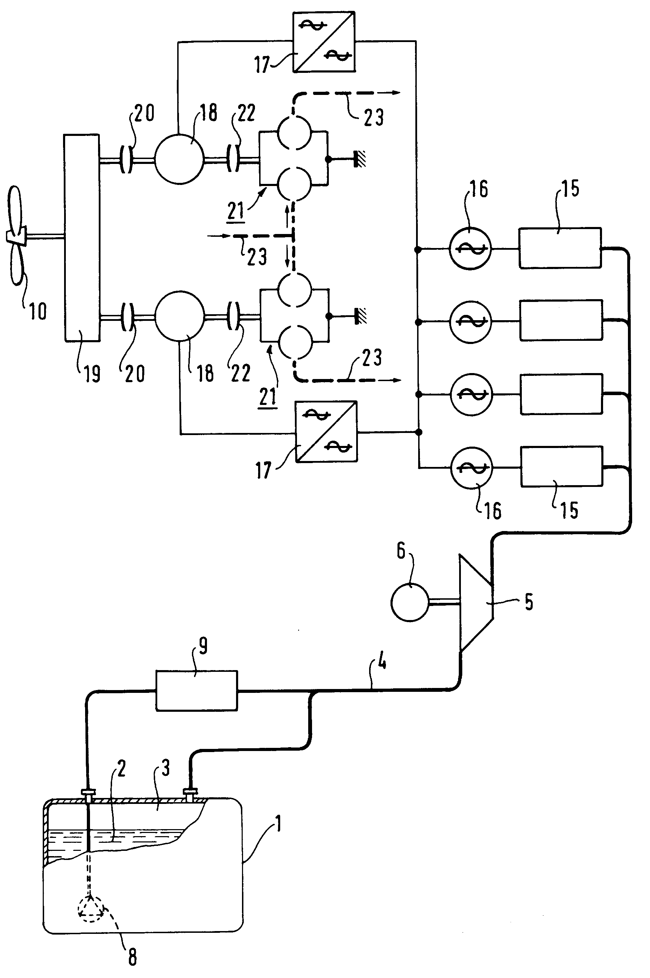

L'invention va maintenant être décrite en se référant au dessin annexé comprenant une figure unique illustrant un mode de réalisation préféré de l'invention.

La figure montre ainsi schématiquement une installation de propulsion d'un navire de transport de gaz liquéfié. Il s'agit par exemple d'un méthanier.

En 1 on a figuré une cuve du navire contenant le méthane liquide 2. La cuve 1 est isolée et le méthane liquide 2 est transporté pratiquement à la pression atmosphérique ambiante. Il en résulte une évaporation naturelle importante utilisée pour la propulsion du navire. Le gaz d'évaporation naturelle 3 est envoyée par une conduite 4 vers un compresseur 5 entraîné par un moteur d'entraînement 6.

A la sortie du compresseur 5, le gaz alimente quatre moteurs diesels 15 qui entraînent chacun un alternateur 16. Ceux-ci alimentent en parallèle deux convertisseurs de fréquence 17 alimentant chacun un moteur électrique 18.

L'appoint nécessaire de combustible est fourni soit par du méthane liquide pompé dans la cuve 1 par une pompe 8, envoyé vers un évaporateur 9 puis vers le compresseur 5, soit par du combustible liquide tel que du fuel oil ou du diesel oil.

Les moteurs 18 attaquent un réducteur 19 par l'intermédiaire de deux embrayages 20.

Le réducteur 19 entraîne l'hélice 10.

Chaque moteur électrique 18 entraîne un frein hydraulique 21 par l'intermédiaire d'un embrayage 22.Il s'agit d'un organe agitateur se déplaçant dans un fluide visqueux : liquide, gazeux ou un mélange des deux, par exemple un frein de FROUDE.

Un circuit d'eau de mer 23 permet d'évacuer les calories.

Dans l'exemple représenté, les freins hydrauliques 21 sont embrayés sur les moteurs électriques 18.

On pourrait bien entendu les embrayer sur le réducteur 19 ou sur l'un de ses pignons ou sur la ligne d'arbre du navire.

Ainsi, en cas d'arrêt du navire, l'installation permet facilement grâce à l'utilisation du frein 14, de dissiper en calories l'énergie mécanique des moteurs 15 produite par la combustion du gaz provenant de l'évaporation naturelle du méthane 2 dans la cuve 1. Dans cette occurrence, on arrête la pompe 8, on débraye l'embrayage 20 et on embraye l'embrayage 22.

Le frein 21 peut fonctionner soit à des vitesses différentes en fonction de l'énergie à dégrader, soit en le remplissant d'une quantité appropriée de fluide.

Le frein 21 peut, comme on l'a représenté sur la figure, être entraîné par l'intermédiaire d'un embrayage 22 mais il peut aussi être relié directement sans embrayage a une sortie mécanique de l'installation et donc être entraîné en permanence. Dans ce dernier cas, il est entraîné à vide sans fluide, lorsque l'embrayage 20 est en position embrayé.

## Revendications

1. Installation de propulsion pour un navire de transport de gaz liquéfié comportant au moins une cuve (1) de gaz liquéfié (2), comprenant au moins un moteur alimenté au moins en partie par les gaz (3) provenant de l'évaporation naturelle dudit gaz liquéfié dans ladite cuve (1), caractérisée en ce que le moteur est un moteur diesel (15) entraînant une hélice (10) par l'intermédiaire d'une chaîne de transmission comprenant un générateur (16) entraîné par ledit moteur diesel, le générateur alimentant un moteur électrique (18) entraînant l'hélice (10) par l'intermédiaire d'un réducteur (19) et d'un embrayage (20) et en ce qu'elle comporte en outre un frein hydraulique (21) entraîné par une sortie mécanique de l'installation.

2. Installation selon la revendication 1, caractérisée en ce que ledit frein hydraulique est entraîné par ledit moteur (18) par l'intermédiaire d'un embrayage (12).

3. Installation selon la revendication 1, caractérisée en ce que le générateur électrique (16) est un alternateur alimentant ledit moteur électrique (18) par l'intermédiaire d'un convertisseur de fréquence (17).
